**Europäisches Patentamt**

**European Patent Office**

**Office européen des brevets**

(19)

(11) Veröffentlichungsnummer : **0 457 178 B1**

(12) **EUROPÄISCHE PATENTSCHRIFT**

(45) Veröffentlichungstag der Patentschrift :
**09.03.94 Patentblatt 94/10**

(51) Int. Cl.⁵ : **A22C 13/00**

(21) Anmeldenummer : **91107469.8**

(22) Anmeldetag : **08.05.91**

(54) Schlauchförmige Verpackungshülle, insbesondere Wursthülle, auf Basis von Cellulose.

(30) Priorität : **16.05.90 DE 4015659**

(43) Veröffentlichungstag der Anmeldung :
**21.11.91 Patentblatt 91/47**

(45) Bekanntmachung des Hinweises auf die
Patenterteilung :
**09.03.94 Patentblatt 94/10**

(84) Benannte Vertragsstaaten :
**AT BE CH DE DK ES FR LI**

(56) Entgegenhaltungen :
**EP-A- 0 001 545**
**EP-A- 0 286 025**
**FR-A- 2 441 558**
**US-A- 4 463 778**

(73) Patentinhaber : **HOECHST
AKTIENGESELLSCHAFT
D-65926 Frankfurt (DE)**

(72) Erfinder : **Hammer, Klaus-Dieter, Dr.
An der Hasenquelle 25
W-6500 Mainz Mombach (DE)**
Erfinder : **Siebrecht, Manfred, Dr.
Buchenweg 10
W-6200 Wiesbaden (DE)**

**Beschreibung**

Die Erfindung bezieht sich auf eine schlauchförmige Verpackungshülle, insbesondere Wursthülle, auf Basis von Cellulose, insbesondere faserverstärkter Cellulose, mit einer Barriereschicht gegenüber Luftsauerstoff und Wasserdampf.

Eine Hülle dieser Art ist aus der EP-A-0 001 545 (=US-A-4,287,217) bekannt geworden. Sie besteht aus faserverstärktem Cellulosehydrat als Trägermaterial und besitzt auf ihrer Innenseite einen unterbrechungsfreien wasserdampfundurchlässigen Filmüberzug aus Vinylidenchlorid-Copolymerisat (PVDC) und auf ihrer Außenseite eine Schicht von 0,5 bis 8 g/m² Polyacrylsäureester, die aufgrund einer Vielzahl von Durchbrechungen wasserdurchlässig ist. Während die PVDC-Innenschicht die Barriereschicht bildet, dient die durchlässige Acrylatschicht auf der Außenseite bei der bekannten Wursthülle zur Herabsetzung ihrer Stoßempfindlichkeit und ihrer unerwünschten Neigung, beim Anschneiden der Wurst stark ein- und weiterzureißen. Hüllen dieser Art werden aufgrund ihrer Sperrschicht auf der Innenseite als Wursthüllen für Koch- und Brühwurst eingesetzt. Der Auftrag der Polyacrylatdispersion auf die Außenseite der Cellulosehülle erfolgt auf den noch im Gelzustand befindlichen Schlauch bei seiner Herstellung aus Viskose, d.h. noch vor dem Trocknen.

Die Cellulosehülle der EP-A-0 100 056 (=US-A-4,529,634) zeigt auf ihrer Außenseite ebenfalls eine Beschichtung aus Polyacrylsäureester, die allerdings ein noch geringeres Flächengewicht von kleiner als 0,5 g/m² aufweist. Diese Hülle ist für Wasserdampf durchlässig und ist als Wursthülle für Trockenwurst-, Dauerwurst- und Rohwurst-Typen vorgesehen. Für Koch- und Brühwurst ist sie nicht geeignet.

Barriereschichten auf Basis von PVDC zeigen den Vorteil, daß die fertiggestellte Wurst während der Lagerung praktisch kein Wasser verliert, und die Wursthülle auch nach der Lagerung noch prall und faltenfrei an dem Füllgut anliegt. Würste vom Leberwursttyp, deren Wurstbrät durch Einwirkung von Luftsauerstoff sich unansehnlich verfärbt, bleiben unverändert, da die PVDC-Schicht gleichzeitig eine Barriere gegenüber Luftsauerstoff bildet und das Eindringen von Luftsauerstoff in das Wurstbrät verhindert. Eine faserverstärkte Cellulosehülle mit einer 10 bis 12 µm dicken PVDC-Beschichtung zeigt beispielsweise eine extrem geringe Wasserdampfdurchlässigkeit von 0,5 bis 2 g/m² 24 h und eine äußerst niedrige Sauerstoffdurchlässigkeit von 2,5 bis 4 cm³/m² 24 h bar (jeweils gemessen nach DIN 53 122 an 5 cm² Hüllenfläche). Bei Brühwurst mit der Hülle aus faserverstärkter Cellulose und der PVDC-Sperrschicht auf der Hülleninnenseite bewegt sich der Gewichtsverlust beim Lagern im Kühlraum (7 °C, 65 % r.F.) bei 0,5 bis 1,5 % je Woche (bei Kaliber 60 mm).

Diese Hüllen zeigen jedoch den Nachteil, daß sie nach dem Abschälen von der Wurst aufgrund des PVDC-Gehalts zu Problemen bei der Entsorgung führen können. Bemängelt wird an PVDC-beschichteten Hüllen vor allem die Bildung von HCl und organischen Chlorverbindungen bei ihrer Verbrennung. Bei einem Flächengewicht von 10 g PVDC je m² Hüllenoberfläche beträgt der Gehalt an organisch gebundenem Chlor ca. 60 g je kg Hüllenmaterial.

Es ist deshalb Aufgabe der vorliegenden Erfindung, eine wasserdampfdichte und sauerstoffundurchlässige Hülle, insbesondere Wursthülle für Koch- und Brühwurst, mit einer chlorfreien Alternativbeschichtung anzugeben, welche die guten Barriereeigenschaften von PVDC etwa erreicht und die erwähnten Nachteile bei der Entsorgung nicht aufweist.

Diese Aufgabe wird erfindungsgemäß durch die schlauchförmige Verpackungshülle mit den im Anspruch 1 genannten Merkmalen gelöst, die abhängigen Ansprüche geben Weiterbildungen der Hülle an.

Das eigentliche Hüllenmaterial besteht aus Cellulose, nämlich Cellulosehydrat, das auch als regenerierte Cellulose oder Zellglas bezeichnet wird. Die Verpackungshülle besteht aus einem nahtlosen Schlauch, geeignet sind jedoch auch Schläuche mit einer Längsnaht, die z.B. durch längsaxiales Falten einer Cellulosefolie und Verkleben der überlappenden Ränder hergestellt werden. Die Verpackungshülle ist entweder unverstärkt, vorzugsweise jedoch faserverstärkt. Die üblicherweise als Faserdarm bezeichnete faserverstärkte Wursthülle wird besonders für großkalibrige Würste eingesetzt. Die faserverstärkte schlauchförmige Verpackungshülle zeigt dann den für große Wursthüllen üblichen Durchmesser von 30 bis 180 mm. Sie ist mit einer schlauchförmig gebogenen Faserbahn verstärkt, die auf der Innen- und/oder Außenseite mit Cellulose versehen ist.

Im Gegensatz zu den üblichen Barriereschichten auf Basis von PVDC kann die Barriereschicht der Erfindung auch direkt auf der relativ rauhen Oberfläche der Faserverstärkung aufgebracht werden, ohne daß sich die Barriereschicht von dieser Unterlage ablöst. Es ist deshalb nach der Erfindung nicht erforderlich, daß sich zwischen der Barriereschicht und der Faserverstärkung eine Celluloseschicht befindet. Die Faserverstärkung besteht gewöhnlich aus den üblichen Langfaserpapieren auf Basis von verfestigten Vliesstoffen aus Hanffasern, jedoch sind auch andere textile Flächengebilde geeignet.

Der zu beschichtende Celluloseschlauch wird auf übliche Weise, beispielsweise nach dem Viskoseverfahren hergestellt. Hierbei wird ein Schlauch oder eine zu einem Schlauch geformte Faserbahn, z.B. aus Papier oder Hanffasern, durch eine Ringdüse auf der Innen- und/oder Außenseite mit alkalischer Viskoselösung beschichtet und mit einer sauren Fällflüssigkeit behandelt, welche die Koagulation der Viskose bewirkt. Die Viskoselösung enthält gegebenenfalls die zur Ausbildung einer weißen oder farbigen Hülle erforderlichen Farbstoffpigmente. Zur Herstellung verstärkungsfreier Cellulosehüllen wird die Viskose schlauchförmig direkt in das Fällbad ausgepreßt. Der erhaltene gegebenenfalls faserverstärkte Schlauch aus Cellulosehydrat-Gel durchläuft die üblichen Waschbäder und Weichmacherbäder. Vor dem Trocknen wird die mit der Barriereschicht zu versehende Oberfläche des Schlauches gegebenenfalls mit einem Mittel beschichtet, welches zwischen der Barriereschicht und der Celluloseschicht bzw. zwischen der Barriereschicht und der Faserverstärkung eine haftvermittelnde Schicht ausbildet. Diese Beschichtung erfolgt auf übliche Weise, z.B. durch Tränken in einem Flüssigkeitsbad, Walzenauftrag oder Besprühen. Zur Verbesserung der Haftfestigkeit des Überzugs aus Copolymeren werden beispielsweise die für Sperrschichten aus PVDC üblichen kationischen Harze in noch wasserlöslicher Form aufgetragen, welche beim abschließenden Trockenprozeß vernetzt und in ihre wasserunlösliche Form übergeführt werden. Geeignete Harzlösungen sind insbesondere wäßrige Epichlorhydrin-Polyaminpolyamid-Lösungen, die im Handel erhältlich sind. Die Konzentration dieser Harzlösungen beträgt 0,8 bis 5, insbesondere 1 bis 3 Gew.-%. Abschließend erfolgt der Trockenprozeß, bei dem der Wassergehalt gewöhnlich bis auf Werte von 7 bis 15 % reduziert wird. Der resultierende Celluloseschlauch besitzt nach der Trocknung einen üblichen Weichmachergehalt, vorzugsweise von 15 bis 30 Gew.-%, bezogen auf das Hüllengewicht, und wird in diesem Zustand zur Beschichtung mit dem Copolymeren der Erfindung eingesetzt.

Zweckmäßigerweise enthält die Beschichtungsflüssigkeit für den Haftvermittler den Weichmacher für die Cellulose, insbesondere ein- oder mehrwertige Alkohole, wie z.B. Glycerin und/oder Propandiol (Propylenglykol), oder deren Mischungen in üblicher Menge.

Die Verpackungshülle zeigt auf ihrer inneren und/oder äußeren Oberfläche die Barriereschicht der Erfindung. Im allgemeinen ist ein einziger Überzug, d.h. auf der Innen- oder Außenseite der Hülle, ausreichend. In bevorzugter Ausführungsform befindet sich der Überzug nur auf der Innenseite der Cellulosehülle. Das auf der Außenseite der Hülle unbeschichtete Cellulosematerial kann nach dem Brühen der Wurst austrocknen und schrumpfen, so daß die Wursthülle dann prall und faltenfrei am Wurstbrät anliegt.

Die erfindungsgemäße Barriereschicht bildet einen geschlossenen, zusammenhängenden Film und besitzt ein Flächengewicht, das ausreicht, um die Wasserdampfdurchlässigkeit der Cellulosehülle auf einen Wert von kleiner/gleich 50 g/m² 24 h herabzusetzen. Die Sauerstoffdurchlässigkeit der Hülle soll durch die Beschichtung auf Werte von gleich/kleiner 12 cm³/m² 24 h bar abgesenkt werden (gemessen jeweils nach DIN 53 122 an 5 cm² Hüllenfläche bei einem Wassergehalt der Hülle von 8 bis 10 Gew.-% und einem Glyceringehalt von 20 Gew.-%). Diese Werte werden durch ein Mindestflächengewicht von 12 g der Barriereschicht je m² Hüllenoberfläche erreicht, wobei das Flächengewicht des gasdichten Überzugs auf der Innen- und/oder Außenseite der Hülle vorhanden ist. Im allgemeinen wird jedoch ein Mindestwert von 14 bis 15 g/m² für das Flächengewicht des Überzugs angewendet, um noch niedrigere Durchlässigkeitswerte zu erzielen. Bei einer Überzugsdicke entsprechend einem Flächengewicht von 18 bis 25, insbesondere 20 bis 30 g/m², auf der Innen- oder Außenseite der Hülle werden optimale Eigenschaften erreicht. Durch Vergrößerung der Schichtdicke läßt sich die Wasserdampfdurchlässigkeit bis auf etwa 5 g/m² 24 h und die Sauerstoffdurchlässigkeit bis auf etwa 5 cm³/m² 24 h bar absenken.

Das Copolymere der Barriereschicht ist aus Vinylmonomeren aufgebaut und weitgehend klebefrei, was durch die Einstellung eines möglichst hohen mittleren Molekulargewichts des Copolymeren erzielt wird. Hohe Molekulargewichte lassen sich bekanntlich durch besonders langsame Polymerisation erreichen. Zur Verlängerung der Reaktionszeit wird das Gemisch der zu polymerisierenden Verbindungen ausreichend gekühlt. Zur Auswahl von geeigneten Copolymeren aus den im Handel erhältlichen Produkten ist der Wert für die relative Viskosität des Copolymeren im organischen Lösungsmittel zu bestimmen. In Dimethylformamid (DMF) soll dieser Wert für eine 1 gew.-%ige Copolymerlösung mindestens 2,6, insbesondere mindestens 3,0 betragen.

Zur Bestimmung dieses Wertes wird das dispergierte oder gelöste Handelsprodukt durch Zugabe von Säure ausgefällt, mit Wasser gereinigt und getrocknet. Nach Herstellung der 1%igen Lösung in DMF wird die relative Viskosität nach folgender Gleichung ermittelt:

$$\text{rel. Visk.} = \frac{t_L \cdot D_L}{t_{LM} \cdot D_{LM}} \quad (20\ °C)$$

$t_L =$     Durchflußzeit der Lösung
$D_L =$     Dichte der Lösung
$t_{LM} =$     Durchflußzeit des Lösungsmittels

$D_{LM}$ =        Dichte des Lösungsmittels

Die Durchflußzeit wird ermittelt mit einer Kapillare, Durchmesser 0,5 mm (KPG-Viskosimeter nach Ostwald).

Wenn der erfindungswesentliche Kunststoffüberzug auf der Innenseite vorgesehen ist, enthält er zweckmäßigerweise zusätzlich ein Wachs, beispielsweise ein pflanzliches Wachs wie Candelilla-, Carnauba- oder Montanwachs, ein tierisches Wachs wie Bienenwachs, ein Mineralwachs wie Polyolefinwachs, welches aus n- und iso-Paraffinen besteht, oder ein synthetisches Wachs, z.B. auf Basis von Oxazolin. Ein besonders geeignetes Wachs ist chemisch verändertes Montanwachs (KPS-Typ, Herst. Hoechst). Diese Wachse sind als Zusatz zu hydrophilen Copolymeren in der EP-A-0 100 056 beschrieben.

Ferner ist es zweckmäßig, den Kunststoffüberzug mit einem Gleitmittel zu versehen. Hierzu sind insbesondere feinteilige Feststoffteilchen geeignet, die ausreichend hitzestabil sind, so daß sie bei der Trocknung der auf die Hülle aufgebrachten Copolymerdispersion nicht schmelzen. Zu diesen Gleitmitteln gehören Pigmente auf Basis von $SiO_2$, $CaCO_3$ und Aluminiumsilikat mit einem mittleren Teilchendurchmesser von kleiner als 4, insbesondere kleiner als 2 μm.

Die Barriereschicht besteht aus einem oder mehreren Copolymeren. Diese Copolymeren der Barriereschicht bestehen aus mindestens zwei, vorzugsweise aus zwei bis vier, Vinylmonomeren, die vorzugsweise hydrophile Gruppen aufweisen und aus den im Anspruch 1 genannten Comonomeren bestehen. In besonderen Ausführungsformen sind zusätzlich die im Anspruch 2 und/oder 3 genannten Vinylmonomeren im Copolymeren vorhanden.

Die Vinylmonomeren besitzen die allgemeine Formel $CH_2=CR^1-X$, wobei $R^1$ eine Methylgruppe oder Wasserstoff ist. X bedeutet eine $(-OCOR^2)$- oder $(-CO_2R^2)$-Gruppe, wobei $R^2$ eine Alkylgruppe mit 1 bis 20, vorzugsweise 1 bis 10, insbesondere 1 bis 5 C-Atomen ist. Wenn X eine $(-OCOR^2)$-Gruppe ist, dann ist $R^2$ vorzugsweise ein Methyl-, Ethyl- oder Propylrest. Für den Fall $X=(-CO_2R^2)$ ist $R^2$ vorzugsweise ein Methyl-, Ethyl-, Propyl-, Isopropyl-Butyl-, oder Isobutyl-Rest.

Die nach Anspruch 2 zusätzlich bis zu 45 Gew.-% im Copolymeren vorhandenen Vinylmonomeren sind (Meth)acrylsäure und (Meth)acrylnitril. Im allgemeinen ist der Anteil dieser Comonomeren jedoch relativ niedrig. (Meth)acrylsäure ist gewöhnlich in einer Menge von 0,1 bis 20 und (Meth)acrylnitril in einer Menge von 0,1 bis 35 Gew.-% im Copolymeren vorhanden.

Anstelle oder zusätzlich zu diesen Vinylmonomeren sind die in Anspruch 3 genannten weiteren Vinylmonomeren im Copolymeren vorhanden. Es handelt sich um die folgenden Monomeren: Vinylacetal, Butadien, Isopren, Styrol, Crotonsäure(ester), Itaconsäure(ester) und Maleinsäure(ester), wobei der Alkoholbaustein der Ester 1 bis 10, insbesondere 1 bis 5 C-Atome besitzt. Der Anteil dieser weiteren Vinylmonomeren beträgt insgesamt maximal 45 Gew.-%. Der Anteil aller weiteren Vinylmonomeren (Ansprüche 2 und 3) beträgt in jedem Fall weniger als 50 Gew.-%, so daß die Comonomeren des Anspruchs 1 im Copolymeren stets überwiegen.

In bevorzugter Ausführungsform besteht das Copolymere aus ein, zwei oder drei (Meth)acrylsäureestern, die zusammen einen Anteil von mindestens 60, insbesondere mindestens 85 Gew.-% des Copolymeren besitzen.

Zur Herstellung der Sperrschicht auf der inneren und/oder äußeren Hüllenoberfläche wird der Celluloseschlauch mit einer wäßrigen Lösung oder Dispersion des Copolymeren beschichtet und das Lösungs- bzw. Dispersionsmittel durch Hitzeeinwirkung entfernt. Solange der Schlauch noch größere Mengen Wasser enthält, steigt seine Oberflächentemperatur kaum über 100 °C. Nach weitgehender Entfernung des Wassers wird das aufgebrachte Copolymere, das in Form von kleinen Kugeln vorliegt, zur Herstellung eines geschlossenen Filmes bei erhöhter Temperatur, insbesondere bei 130 bis 170 °C gesintert oder geschmolzen. Die Konzentration der Beschichtungsflüssigkeit beträgt im allgemeinen 15 bis 40 Gew.-%. Gegebenenfalls enthält die Beschichtungsflüssigkeit übliche Additive wie Dispergierhilfsmittel, Farbstoffe, Emulgatoren und Gleitmittel. Soll die Barriereschicht zusätzlich ein Wachs enthalten, so wird der Beschichtungsflüssigkeit zusätzlich 0,5 bis 3 Gew.-% (bezogen auf das Copolymere) Wachs zugefügt. Gegebenenfalls enthält die Beschichtungsflüssigkeit außerdem 0,5 bis 2 Gew.-% (bezogen auf das Copolymere) hitzestabiles, insbesondere anorganisches Pigment als Gleitmittel.

Der Auftrag der Beschichtungsflüssigkeit erfolgt mit üblichen Vorrichtungen wie sie zur Herstellung von Innen- und Außenbeschichtungen von Celluloseschläuchen bekannt sind. Auch das Entfernen der Beschichtungsflüssigkeit und das Verschmelzen des Copolymeren zu einem dichten, zusammenhängenden Kunststoffilm erfolgt mit üblichen Trockenvorrichtungen.

Die schlauchförmige Hülle ist aufgrund ihrer Barriereschicht besonders als Wursthülle für Koch- und Brühwürste geeignet, für die bisher PVDC-Sperrschichten vorgesehen wurden. Beim Lagern im Kühlraum (7 °C, 65 % r.F.) zeigen die Würste von Kaliber 60 mm bei 50 cm Länge infolge Wasserabgabe einen Gewichtsverlust von 1,5 bis maximal 4 % je Woche. Die guten Barriereeigenschaften von PVDC-Sperrschichten werden zwar durch die Barriereschicht der Erfindung nicht ganz erreicht, jedoch sind die erzielten Eigenschaften für viele Wursttypen bereits vollkommen ausreichend. Im Hinblick auf die problemlose Beseitigung der Hülle nach ihrem Gebrauch stellen die Hüllen gemäß der Erfindung jedenfalls eine vorteilhafte Alternative dar.

Die Schlauchhülle wird wie üblich flachgelegt und in Rollenform gelagert, zu einseitig abgebundenen Abschnitten verarbeitet oder zu Raupen gerafft. Die Beschichtung ist für die Verarbeitungsschritte ausreichend fest, flexibel, dehnfähig und versprödet beim Lagern nicht. Die Hülle besitzt den für Wursthüllen auf Cellulosebasis üblichen Gehalt an Weichmacher und Wasser.

Die Erfindung wird durch die nachstehenden Beispiele näher erläutert.

Zur Innenbeschichtung eines faserverstärkten Celluloseschlauches mit einem Durchmesser von 60 mm werden wäßrige Dispersionen mit den folgenden Copolymeren eingesetzt:

(a)

49,5 % Butylacrylat,
49,5 % Methylmethacrylat,
1,0 % Acrylsäure;
relative Viskosität 3,1

(b)

47,0 % Butylacrylat,
47,0 % Methylmethacrylat,
1,0 % Acrylsäure,
5,0 % Acrylnitril;
relative Viskosität 2,8

(c)

46,0 % Ethylacrylat,
46,0 % Methylmethacrylat,
2,0 % Acrylsäure,
6,0 % Acrylnitril;
relative Viskosität 3,4

(d)

30,0 % Butylacrylat,
30,0 % Ethylacrylat,
30,0 % Methylacrylat,
8,0 % Acrylnitril,
2,0 % Acrylsäure.
relative Viskosität 3,4

Die zu beschichtende schlauchförmige Cellulosehülle ist durch eine Faserpapiereinlage verstärkt, welche auf der Innen- und Außenseite eine Schicht aus regenerierter Cellulose aufweist. Die Celluloseschichten wurden durch beidseitige Beschichtung des Faserpapiers mit alkalischer Viskoselösung und anschließender Fällung der Viskose hergestellt. Die innere Oberfläche des Schlauches besitzt zur festen Verankerung der Barriereschicht eine Beschichtung aus einem hitzegehärteten Polyamin-Polyamid-Epichlorhydrin-Harz. Harze dieser Art sind als Haftvermittler für PVDC-Barriereschichten auf Cellulosefolien bekannt. In den Schlauch wird eine wäßrige Dispersion der folgenden Zusammensetzung gefüllt:

20 - 30      Gew.-% eines der Copolymeren (a) bis (d)
2 - 3        Gew.-% KPS-Wachs (bezogen auf Copolymer)
0,6-0,8      Gew.-% Pigmente von Aluminiumsilikat, mittlere Teilchengröße kleiner 1 µm (bezogen auf Copolymer, Gleitmittel)

Der Schlauch wird senkrecht nach oben geführt, so daß überschlüssige Dispersion ablaufen kann, durch ein Dosierwalzenpaar geführt, wie in der EP-A-0 037 023 gezeigt, dann im aufgeblasenen Zustand getrocknet und danach auf ca. 160 °C aufgeheizt, wobei die Copolymerteilchen zu einem geschlossenen Überzug zusammensintern.

Nach dem Trocknen zeigen die Hüllen eine innere Barriereschicht von 18 bis 25 g/m$^2$. Das Beschichtungsgewicht wird durch Ablösen mit DMF bestimmt. Die Schlauchhülle wird angefeuchtet und zu Raupen gerafft. Nach einwöchiger Lagerung der Raupen im gepreßten Zustand unter Tropenbedingungen (38 °C, 86 % r.F.) sind die Raffalten unbeschädigt, d.h. weiterhin ausreichend dicht.

50 cm lange Hüllenabschnitte werden mit Brühwurstbrät gefüllt. Bei Lagerung im Kühlraum zeigen die Würste infolge Wasserabgabe einen noch akzeptablen Gewichtsverlust, die Hülle bleibt über 6 Wochen faltenfrei und haftet am Wurstbrät. In gleicher Weise mit Wurstbrät vom Leberwursttyp hergestellte Würste zeigen nach 4- bis 6-wöchiger Lagerzeit keine Verfärbung des Wurstbräts. Die Hülle ist somit ausreichend undurchlässig für Wasserdampf und Luftsauerstoff.

Die Ergebnisse sind der nachfolgenden Tabelle zu entnehmen. Die Werte für Durchlässigkeit und Ge-

EP 0 457 178 B1

wichtsverlust sind Durchschnittswerte.

| | Copolymer Konzentration % | Auftragsmenge g/m$^2$ | $O_2$ Durchlässigkeit (x) | $H_2O$ Durchlässigkeit g/m$^2$ 24 h | Gewichtsverlust je Woche % |
|---|---|---|---|---|---|
| a | 20 | 18 | 9,5 | 12 | 2,2 |
| b | 25 | 22 | 6,8 | 6,5 | 1,8 |
| c | 28 | 20 | 8,0 | 16 | 2,5 |
| d | 30 | 25 | 10,5 | 18 | 3,0 |

(x) $cm^3/m^2$ 24 h bar

Das Copolymer der Zusammensetzung (a) ergibt eine Innenbeschichtung, die zu einer besonders guten Schälbarkeit der Hülle von der Wurstmasse führt. Durch die Auswahl der Copolymeren läßt sich somit auch die gewünschte Haftung und Schälbarkeit der Hülle einstellen.

**Patentansprüche**

1. Schlauchförmige Verpackungshülle, insbesondere Wursthülle, auf Basis von Cellulose, insbesondere faserverstärkter Cellulose, mit einer Barriereschicht gegenüber Luftsauerstoff und Wasserdampf, dadurch gekennzeichnet, daß die Barriereschicht ein Flächengewicht von mindestens 12, insbesondere mindestens 14 g/m2 besitzt und im wesentlichen aus einem statistischen Copolymeren auf Basis von copolymerisierten, vorzugsweise hydrophilen Vinylmonomeren oder einem Gemisch aus diesen Copolymeren besteht, wobei die Vinylmonomeren die allgemeine Formel
   $CH_2$=CR1-X aufweisen, in der
   R1        eine Methylgruppe oder Wasserstoff und
   X         eine (-OCOR2)-Gruppe oder
             eine (-$CO_2$R2)-Gruppe ist, wobei
   R2        eine Alkylgruppe mit 1 bis 20, vorzugsweise 1 bis 10, insbesondere 1 bis 5 C-Atomen, ist.

2. Hülle nach Anspruch 1, dadurch gekennzeichnet, daß das Copolymere oder wenigstens eines der Copolymeren weitere copolymerisierte Vinylmonomere der in Anspruch 1 genannten Formel, in der X eine ($CO_2$H)-Gruppe oder eine (CN)-Gruppe ist, enthält, wobei der Anteil der weiteren Vinylmonomeren insgesamt maximal 45 Gew.-%, bezogen auf das Copolymere, beträgt.

3. Hülle nach Anspruch 1 oder 2, dadurch gekennzeichnet, daß das Copolymere oder wenigstens eines der Copolymeren außer wenigstens einem Vinylmonomeren der Formel $CH_2$=CR1-X noch mit einem oder mehreren der folgenden Monomeren copolymerisiert ist:
   Vinylacetal, Butadien, Isopren, Styrol, Crotonsäure(ester), Itaconsäure(ester), Maleinsäure(ester), wobei der Alkoholbaustein der Ester 1 bis 10, insbesondere 1 bis 5 C-Atome besitzt, und der Anteil dieser weiteren Monomeren insgesamt maximal 45 Gew.-%, bezogen auf das Copolymere, beträgt.

4. Hülle nach einem der Ansprüche 1 bis 3, dadurch gekennzeichnet, daß das Copolymere ein bis drei Comonomere auf Basis von Acrylsäureester und/oder Methacrylsäureester umfaßt.

5. Hülle nach einem der Ansprüche 1 bis 4, dadurch gekennzeichnet, daß der Anteil an (Meth)acrylsäure 0,1 bis 20 Gew.-%, bezogen auf das Copolymere, beträgt.

6. Hülle nach einem der Ansprüche 1 bis 5, dadurch gekennzeichnet, daß der Anteil des (Meth)acrylnitrils 0,1 bis 35 Gew.-%, bezogen auf das Comonomere, beträgt.

7. Hülle nach einem der Ansprüche 2 bis 6, dadurch gekennzeichnet, daß das Copolymere aus Einheiten

6

EP 0 457 178 B1

von Methyl-, Ethyl-, Propyl- und/oder Butyl-(meth)acrylat als Hauptkomponente und aus (Meth)acrylsäure und/oder (Meth)acrylnitril in geringerem Umfang aufgebaut ist.

8. Verfahren zur Herstellung der schlauchförmigen Verpackungshülle nach einem der Ansprüche 1 bis 7, dadurch gekennzeichnet, daß man den gegebenenfalls faserverstärkten Celluloseschlauch auf seiner Innen- und/oder Außenseite mit einer wäßrigen Dispersion beschichtet, die 13 bis 40, insbesondere 15 bis 30 Gew.-% des Copolymeren enthält, das Dispersionsmittel entfernt und danach den beschichteten Schlauch zur Ausbildung der Barriereschicht auf 130 bis 170 °C erhitzt.

## Claims

1. Tubular packaging casing, in particular sausage casing, on a basis of cellulose, in particular of fiber-reinforced cellulose, comprising a barrier layer towards atmospheric oxygen and steam, characterized in that said barrier layer has a weight per unit area of at least 12 g/m$^2$, in particular of at least 14 g/m$^2$ and is essentially comprised of a random copolymer based on copolymerized, preferably hydrophilic vinyl monomers or of a mixture of these copolymers, the vinyl monomers corresponding to the general formula $CH_2=CR^1$-X, where

    $R^1$     denotes a methyl group or hydrogen, and

    X     denotes a (-$OCOR^2$) group or a (-$CO_2R^2$) group,

    with $R^2$ denoting an alkyl group having 1 to 20, preferably 1 to 10, and in particular 1 to 5 carbon atoms.

2. Casing as claimed in claim 1, characterized in that the copolymer or at least one of the copolymers contains further copolymerized vinyl monomers of the formula of claim 1, where X denotes a ($CO_2H$) group or a (CN) group, whereby the total amount of further vinyl monomers does not exceed a maximum of 45 % by weight, relative to the copolymer.

3. Casing as claimed in claim 1 or 2, charcterized in that, in addition to at least one vinyl monomer of the formula $CH_2=CR^1$-X, the copolymer or at least one of the copolymers is also copolymerized with one or several of the following monomers:

    vinyl acetal, butadiene, isoprene, styrene, crotonic acid (ester), itaconic acid (ester), maleic acid (ester), whereby the alcohol component of the esters has 1 to 10, in particular 1 to 5, carbon atoms and the total proportion of these further monomers does not exceed a maximum of 45 % by weight, relative to the copolymer.

4. Casing as claimed in any of claims 1 to 3, charcterized in that the copolymer comprises one to three comonomers based on acrylic acid ester and/or methacrylic acid ester.

5. Casing as claimed in any of claims 1 to 4, characterized in that the proportion of (meth)-acrylic acid is 0.1 to 20 % by weight, relative to the copolymer.

6. Casing as claimed in any of claims 1 to 5, characterized in that the proportion of (meth)-acrylonitrile is 0.1 to 35 % by weight, relative to the comonomer.

7. Casing as claimed in any of claims 2 to 6, characterized in that the copolymer is comprised of units of methyl, ethyl, propyl and/or butyl (meth)-acrylate as the main component and of a minor amount of (meth)acrylic acid and/or (meth)acrylonitrile.

8. Process for the production of the tubular packaging casing as claimed in any of claims 1 to 7, characterized in that the inner and/or outer surface of the optionally fiber-reinforced cellulose tubing is/are coated with an aqueous dispersion containing 13 to 40 % by weight, in particular 15 to 30 % by weight, of the copolymer, the dispersant is removed, and the coated tubing is then heated to a temperature of between 130 and 170 °C, in order to form the barrier layer.

## Revendications

1. Enveloppe en forme de boyau, en particulier enveloppe pour saucisses, à base de cellulose, notamment

7

de cellulose renforcée par des fibres, comportant une couche barrière à l'égard de l'oxygène de l'air et de la vapeur d'eau, caractérisée en ce que la couche barrière a un poids par unité de surface d'au moins 12, en particulier d'au moins 14 g/m$^2$, et consiste essentiellement en un copolymère statistique à base de monomères vinyliques de préférence hydrophiles, copolymérisés, ou d'un mélange de ces copolymères, les monomères vinyliques présentant la formule générale CH$_2$=CR$^1$-X, dans laquelle

R$^1$ est un atome d'hydrogène ou le groupe méthyle, et

X est un groupe (-OCOR$^2$) ou un groupe (-CO$_2$R$^2$),

R$^2$ étant un groupe alkyle ayant de 1 à 20, de préférence 1 à 10, et en particulier 1 à 5 atomes de carbone.

2. Enveloppe selon la revendication 1, caractérisée en ce que le copolymère ou au moins l'un des copolymères contient d'autres monomères vinyliques de formule citée dans la revendication 1, copolymérisés, dans lesquels X est un groupe (CO$_2$H) ou un groupe (CN), la proportion des autres monomères vinyliques s'élevant globalement au maximum à 45 % en poids, par rapport au copolymère.

3. Enveloppe selon la revendication 1 ou 2, caractérisée en ce que le copolymère ou au moins l'un des copolymères est copolymérisé, en plus d'au moins un monomère vinylique de formule CH$_2$=CR$^1$-X, avec un ou plusieurs des monomères suivants:

acétate de vinyle, butadiène, isoprène, styrène, acide (ester) crotonique, acide (ester) itaconique, acide (ester) maléique, le composant alcool des esters ayant de 1 à 10, en particulier de 1 à 5 atomes de carbone, et la proportion de ces autres monomères s'élevant globalement au maximum à 45 % en poids, par rapport au copolymère.

4. Enveloppe selon l'une des revendications 1 à 3, caractérisée en ce que le copolymère comprend 1 à 3 comonomères à base d'esters d'acide acrylique et/ou d'esters d'acide méthacrylique.

5. Enveloppe selon l'une des revendications 1 à 4, caractérisée en ce que la proportion d'acide (méth)acrylique va de 0,1 à 20 % en poids, par rapport au copolymère.

6. Enveloppe selon l'une des revendications 1 à 5, caractérisée en ce que la proportion du (méth)acrylonitrile va de 0,1 à 35 % en poids, par rapport au comonomère.

7. Enveloppe selon l'une des revendications 2 à 6, caractérisée en ce que le copolymère est constitué de motifs de (méth)acrylate de méthyle, éthyle, propyle et/ou butyle, en tant que composant principal, et d'acide (méth)acrylique et/ou de (méth)acrylonitrile en proportion plus faible.

8. Procédé pour la fabrication de l'enveloppe en forme de boyau selon l'une des revendications 1 à 7, caractérisé en ce que l'on revêt le boyau cellulosique, éventuellement renforcé par des fibres, sur sa face interne et/ou externe, avec une dispersion aqueuse qui contient de 13 à 40, en particulier de 15 à 30 % en poids du copolymère, on élimine le dispersant et on chauffe ensuite à 130-170°C le boyau revêtu, pour la formation de la couche barrière.